# EUROPÄISCHE PATENTANMELDUNG

(11) **EP 1 008 283 A1**
(43) Veröffentlichungstag der Anmeldung: **14.06.2000**
(21) Anmeldenummer: 98811207.4
(22) Anmeldetag: 08.12.1998
(51) Int. Cl.: A01B 59/06

(54) **Verfahren und Vorrichtung zum Ankuppeln eies Geräts**

(71) Anmelder: Forrer, Christian, 9655 Stein (SG) (CH)
(72) Erfinder: Forrer, Emil, 9655 Stein (SG) (CH); Forrer, Christian, 9655 Stein (SG) (CH)
(74) Vertreter: Riederer, Conrad A., Dr.

(57) **Zusammenfassung**

Eine Kupplung um Geräte (11) an einen Traktor (13) zu kuppeln weist zwei in der Regel A-förmige Kupplungsteile (23,43) auf Das traktorseitige Kupplungsteil (23) greift beim Ankuppeln des Geräts (11) mit seinem oberen Ende (35) zwischen einer dem Traktor zugewandten Stossfläche (49) und einer näher gelegenen und vom Traktor abgewandten Anschlagfläche (37) unter die nach oben zusammenlaufenden Flanken (67) an den Schenkeln (65) des A-förmigen geräteseitigen Kupplungsteils (43). Danach kann mit dem traktorseitigen Kupplungsteil (23) das geräteseitige Kupplungsteil (43) zusammen mit dem Gerät (11) angehoben werden. Dadurch werden die beiden Kupplungsteile (23,43) unten zusammengeschwenkt und in der Folge miteinander verriegelt.

## Beschreibung

### Technisches Gebiet der Erfindung

Die Erfindung betrifft ein Verfahren zum Ankuppeln eines Geräts an einen Traktor, bei welchem ein am Traktor angeordnetes Kupplungsteil von unten in ein Kupplungsteil am Gerät eingefahren wird, so dass bei einem Anheben des traktorseitigen Kupplungsteils das Gerät mit angehoben wird und in angehobenem Zustand mit dem geräteseitigen am traktorseitigen Kupplungsteil hängt, und in Richtung parallel und quer zur Fahrtrichtung des Traktors stabil mit diesem verbunden ist.

Die Erfindung betrifft auch eine Kupplung zum Kuppeln eines Geräts an einen Traktor, mit einem traktorseitigen Kupplungsteil und einem geräteseitigen Kupplungsteil, wobei das traktorseitige Kupplungsteil in funktionsfähiger Stellung zwei nach oben gerichtete und nach oben hin zusammenlaufende Flanken, und das geräteseitige Kupplungsteil zwei nach unten gerichtete, nach oben hin zusammenlaufende Flanken aufweist, welche Flanken in angekuppeltem Zustand zusammenwirken, mit zwei gegeneinander gerichteten Stossflächen an den beiden Kupplungsteilen, welche etwa vertikal zu einer Achse Traktor/Gerät liegen, mit einer zur Traktorseite hin gerichteten, festen Anschlagfläche am traktorseitigen Kupplungsteil, welches in angekuppeltem Zustand mit einer zur Geräteseite hin gerichteten, festen Anschlagfläche am geräteseitigen Kupplungsteil zusammenwirkt, so dass das traktorseitige Kupplungsteil zum Ankuppeln von unten unter die Flanken und zwischen die Stossfläche und die Anschlagfläche des geräteseitigen Kupplungsteil geführt werden muss.

Unter Traktor wird jedes motorgetriebene Fahrzeug verstanden, welches als Zugfahrzeug oder Arbeitsgerät mit verschiedenen Zusatzgeräten ausgerüstet werden kann.

### Stand der Technik

Traktoren sind in der Regel mit einer Zapfwelle und hydraulisch beweglichen Armen zur Montage von Geräten, z.B. Hebebühnen, Schaufeln oder Mistgabels, Mähwerkzeugen, Heuwendern, Fräsen etc. ausgerüstet. Diese Geräte sind an wenigstens drei Punkten mit dem Traktor verbunden, nämlich sitzen sie z.B. unten seitlich mit zwei Bolzen in zwei Klauen an zwei parallel beweglichen Armen am Traktor und oben an einem längenverstellbaren Element. Damit das Gerät gegenüber dem Motor flexibel befestigt ist, um Bodenunebenheiten ausgleichen zu können, sind die Bolzen in den Klauen vertikal beweglich und ist das Längenverstellbare Element an seinen beiden Enden mit einer Kugel in einer Hohlkugel gelagert.

Um ein solches Gerät an einen Traktor anzuschliessen muss dieses in eine relativ exakt zum Traktor ausgerichtete Stellung gebracht werden, die Bolzen in die Klauen eingehängt werden, und nach dem Anpassen der Stellung der Arme mit der Hydraulik muss noch das obere, längenverstellbare Element eingehängt werden.

Bei angetriebenen Geräten wie Heuwender; Mäher und Schneefräsen etc. muss zudem noch die Zapfwelle mit der Antriebswelle am Gerät gekuppelt werden. Zu diesem Zweck muss der Maschinenführer, hat er keine Hilfe, mehrmals vom Traktor steigen und Handgriffe zum Verbinden des Geräts mit dem Traktor ausführen. Auch beim Abhängen muss er den Traktor verlassen, um das Gerät zu lösen. Dies Manipulationen am laufenden Traktor sind gefährlich und beschwerlich.

### Aufgabe der Erfindung

Die Erfindung soll das Ankuppeln von Geräten an einen Traktor ohne Fremdhilfe und in der Regel ohne Verlassen des Traktors ermöglichen. Im gleichen Arbeitsgang mit dem Ankuppeln des Geräts soll auch die Zapfwelle angeschlossen werden. Dabei soll ein grösserer Spielraum in Bezug auf die Stellung des Geräts zum Traktor beim Ankuppeln möglich sein. Das Gerät soll sich während des Ankuppelns nach dem Traktor bzw. dessen Kupplung ausrichten.

### Beschreibung der Erfindung

Die Aufgabe wird bei einem Verfahren der eingangs erwähnten Gattung erfindungsgemäss dadurch gelöst, dass die Kupplungsteile in einem Winkel zueinander zusammengeführt werden, lediglich im oberen Bereich ineinander eingehängt werden und anschliessend, z.B. durch Anheben des traktorseitigen Kupplungsteils, im unteren Bereich gegeneinander geführt werden. Dadurch ist ein Ankuppeln des Geräts in der Regel durch eine Betätigung der Traktorhydraulik vom Fahrzeug aus zu erreichen.

Vorteilhaft werden die Kupplungsteile während oder nach dem Zusammenführen im unteren Bereich in diesem unteren Bereich miteinander verriegelt, um ein auseinanderschwenken zu verhindern und so das Gerät auch auf Zug vom Traktor weg belastbar zu machen.

Vorteilhaft wird beim Zusammenführen der Kupplungsteile im unteren Bereich die Zapfwelle des Traktors an die Antriebswelle des Geräts angeschlossen. Dadurch ist eine separate, meist die Hände des Ausführenden verschmutzende Manipulation vermieden. Das Gerät kann, ohne vom Traktor steigen zu müssen, gewechselt werden, und unmittelbar danach in Betrieb genommen werden.

Die Erfindung betrifft auch eine Kupplung nach der eingangs erwähnten Gattung. Diese ist erfindungsgemäss dadurch gekennzeichnet, dass die Anschlagfläche am geräteseitigen Kupplungsteil lediglich im oberen Bereich ausgebildet ist, so dass die in diesem oberen Bereich zusammengefügten Kupplungsteile um ein Schwenkzentrum gegeneinander verschwenkbar sind, und im unteren Bereich Mittel zur lösbaren Verriegelung der beiden Kupplungsteile aneinander vorgesehen sind, um wenigstens eine Verschwenkung der auch unten zusammengefügten Kupplungsteile zu verhindern oder freizugeben. Dadurch müssen die Kupplungsteile nicht exakt zusammengeführt werden, sondern richten sich während der Verschwenkung selbsttätig aus. Zusammengefügt ist lediglich ein Auseinanderschwenken bzw. Anheben des Geräts gegenüber dem traktorseitigen Kupplungsteil zu arretieren.

Zu der Kupplungen werden all jene Teile gerechnet, welche an den Traktor oder das Gerät angebracht werden und dem Zusammenfügen und Lösen von Gerät und Traktor dienen. Sie können allenfalls durch andere Teile mit dem gleichen Zweck ersetzt werden. Dazu gehören auch die Kupplungsköpfe von Zapf und Antriebswellen.

Vorteilhaft ist am traktorseitigen Kupplungsteil eine mit einem Motor oder Getriebe verbundene Zapfwelle mit Abstand zum Schwenkzentrum so angeordnet, dass sie in gekuppeltem Zustand axial mit einer allfälligen Antriebswelle am Gerät ausgerichtet ist. Je grösser der Abstand zwischen Schwenkzentrum (oberes Ende der Kupplungsteile) und Wellenachse ist, desto grösser ist der Schwenkradius, auf welchem die Wellen zusammengeführt werden, und desto geringer ist die Gefahr, dass die Wellen beim Kuppeln in einem zu grossen Winkel, welcher zu viel Spielraum zwischen Zapfkopf und Antriebskopf benötigt, gekuppelt werden müssen. Der Vorteil der derart angeordneten Zapfwelle besteht darin, dass das Kuppeln des Antriebs automatisch mit dem Ankuppeln des Geräts geschieht.

Vorteilhaft ist am geräteseitigen Kupplungsteil eine nach oben gerichtete Sicherungsfläche und am traktorseitigen Kupplungsteil eine nach unten gerichtete Sicherungsfläche angeordnet, welche bei zusammengefügten und insbesondere bei verriegelten Kupplungsteilen aneinander anliegend zusammenwirken. Diese Verhindern ein Aushängen des Geräts durch ungewolltes Anheben des Geräts, z.B. im Gelände.

Vorteilhaft entsprechen der Abstand zwischen den Anschlagflächen und den Stossflächen der beiden Kupplungsteile einander. Dadurch sind die beiden Kupplungsteile so verbunden, dass sie jede Bewegung miteinander ausführen müssen. Jedoch ist das traktorseitige Kupplungsteil vorteilhaft im oberen Bereich schmaler als der Abstand zwischen Anschlagfläche und Stossfläche des geräteseitigen Kupplungsteils, so dass die Kupplungsteile gegeneinander verschwenkbar sind.

Vorteilhaft sind die Zapfwelle und die Antriebswelle je mit einem Kupplungskopf bzw. einer Kupplungsbüchse ausgerüstet, welche sich auf einer Kreisbogenlinie zusammenführen lassen. Dies wird z.B. dadurch ermöglicht, dass der Kupplungskopf eine kegelförmige oder kegelstumpfförmige Grundform aufweist. Dabei ist die Verzahnung zwischen dem männlichen und dem weiblichen Kupplungskopf derart auszuführen, dass die Zähne und Zahnlücken des einen und des anderen Kopfes während der Schwenkbewegung der Kupplungsteile ineinandergleiten können.

Alternativ sind die Zapfwelle und die Antriebswelle je mit einem Kupplungskopf bzw. einer Kupplungsbüchse ausgerüstet, und dass der traktorseitige Kupplungskopf oder die traktorseitige Kupplungsbüchse mit der Büchse oder dem Kopf an der Antriebswelle des Geräts geradlinig zusammenführbar sind, und dass der traktorseitige Kupplungskopf oder die traktorseitige Kupplungsbüchse translatorisch verschiebbar gelagert ist.

### Kurzbeschrieb der Figuren

Es zeigt:
- Fig. 1: eine schematische Darstellung eines Zweiachstraktors mit einer erfindungsgemässen Kupplung beim Ankuppeln eines Geräts mit Antriebswelle,
- Fig. 2: eine schematische Darstellung von zwei kegelstumpfförmigen Kupplungsköpfen, welche ein schwenkendes Einkuppeln erlauben,
- Fig. 3: ein geräteseitiges Kupplungsteil an einem Gerät ohne Antriebsachse,
- Fig. 4: ein geräteseitiges Kupplungsteil an einem Gerät mit Antriebsachse,
- Fig. 5: ein traktorseitiges Kupplungsteil an einem Zweiachstraktor

### Beschrieb der Ausführungsbeispiele

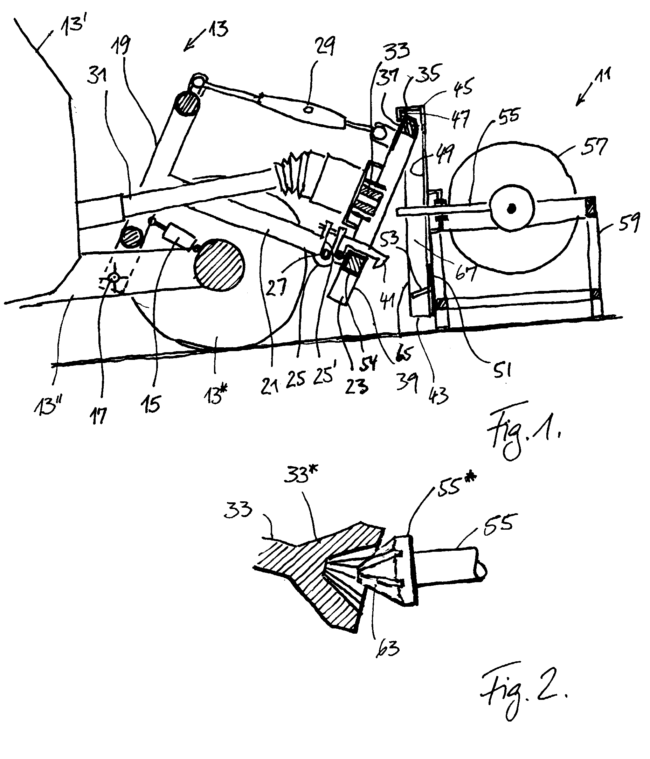

Aus Figur 1, welche eine teilweise Schnittzeichnung durch ein und Gerät 11 einen Traktor 13 ist, ist das Prinzip des erfindungsgemässen Ankuppelns eines Gerätes 11 an einen Traktor 13 ersichtlich.

Am Traktor 13 mit Rädern 13*, Chassis 13'' und Fahrerkabine 13' ist ein mit einem hydraulischen Kolben 15 um eine Achse 17 verschwenkbarer Geräteträger 19 angeordnet. Dieser weist zwei tiefliegende Arme 21 auf, an welchen das traktorseitige Kupplungsteil 23 eingehängt ist. Dazu weist jeder Arm 21 Klauen 25 mit einem länglichen, etwa vertikal ausgerichteten Schlitz 25' auf In diesen Schlitzen 25' entlang deren Längenausdehnung verschiebbar sitzt ein mit dem traktorseitigen Kupplungsteil 23 fest verbundener Stift 27.

Im oberen Bereich des Kupplungsteils 23 ist ein längenverstellbares Element 29 drehbeweglich angelenkt, welches das traktorseitige Kupplungsteil an den Geräteträger 19 zurückbindet. Mit dem längenverstellbaren Element 29 kann die Ausrichtung des Kupplungsteils 23 justiert werden.

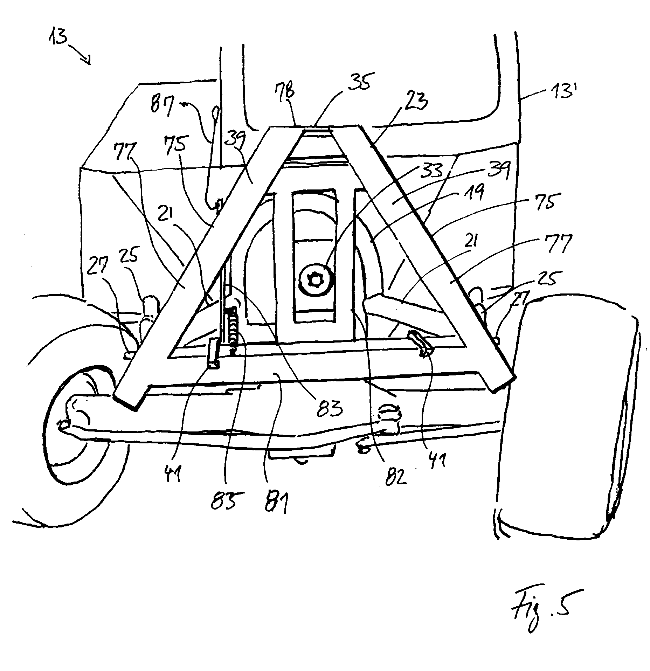

Vom Traktor 13 her läuft eine Zapfwelle 31 zwischen den Armen 21 hindurch zum Kupplungsteil 23 und ist an diesem befestigt. Die Zapfwelle 31 ist in der Länge veränderlich. Am traktorseitigen Kupplungsteil 23 ist ein Zapfkopf 33 in seiner Lage bezüglich Umriss des Kupplungsteils 23 (siehe Fig. 5) unverrückbar angeordnet.

Am traktorseitigen Kupplungsteil 23, welches später anhand der Figur 5 näher beschrieben wird, ist am oberen Ende 35 eine vom Gerät 11 wegweisende Anschlagfläche 37 ausgebildet. Zum Gerät 11 hin weist das Kupplungsteil 23 eine Stossfläche 39 auf. Im unteren Bereich ist es mit Verriegelungsmitteln 41 ausgerüstet, um die beiden Kupplungsteile 23 und 43 aneinander zu verriegeln.

Das geräteseitige Kupplungsteil 43 ist an einem Gerät 11 befestigt. Es weist am oberen Ende 45 eine zum Gerät 11 hin gerichtete Anschlagfläche 47 auf, welche mit der Anschlagfläche 37 zusammenwirkt. Ausserdem ist am geräteseitigen Kupplungsteil 43 eine mit der Stossfläche 39 zusammenwirkende Stossfläche 49, die Gegenstücke 51 zu den Verriegelungsmitteln 41 und eine nach oben gerichtete Sicherungsfläche 53 ausgebildet.

Das in Figur 1 dargestellte Gerät 11 ist eine Schlauchwinde mit einer Antriebswelle 55 zum Antreiben der beiden Schlauchhaspel 57 im Gestell 59. Zum Anhängen des Gerätes 11 an den Traktor 13 und Ankuppeln der Antriebswelle 55 an die Zapfwelle 31 muss der Traktorführer mit dem oberen Ende 35 des traktorseitigen Kupplungsteils 23 hinter die Anschlagfläche 47 des geräteseitigen Kupplungsteils 43 einfahren. Nun kann er den Geräteträger 19 mit dem hydraulischen Zylinder 15 um die Achse 17 verschwenken. Dadurch wird das Gerät 11 am gerätseitigen Kupplungsteil 43 angehoben und das traktorseitige Kupplungsteil 23 an das geräteseitige Kupplungsteil 41 geschwenkt. Bei der Schwenkbewegung, bei der beide Kupplungsteile 23,43 beteiligt sein können, nähern sich die Stossflächen 39 und 49 auch im unteren Bereich an, bis die Klinke 41 am geräteseitigen Kupplungsteil 43 einklinkt. Die Stossflächen 39,49 liegen dann aufeinander und eine nach unten gerichtete Anschlagfläche 61 am traktorseitigen Kupplungsteil 23 steht an der Sicherungsfläche 53 an. Die Sicherungsfläche 53 ist zum geräteseitigen Kupplungsteil hin nach unten geneigt, so dass dieses ohne Widerstand an geschwenkt werden kann und allenfalls noch nach oben in die angestrebte Endlage gedrängt wird.

Bei der Verschwenkung werden auch die Zapfwelle 31 und die Antriebswelle 55 miteinander gekoppelt. Da die Kupplung von zwei axialen Kupplungsköpfen 33,55 idealerweise geradlinig geschieht, die Relativbewegung der beiden Kupplungsteile 23,43 zueinander jedoch eine Schwenkbewegung ist, können beim Kuppeln der Wellen Probleme auftreten. Müssen lediglich kleinere Drehmomente übertragen werden, genügt es, die Länge der ineinandergreifenden Teile der Wellen 31,55 kurz zu halten und z.B. die Antriebswelle leicht zu zu spitzen.

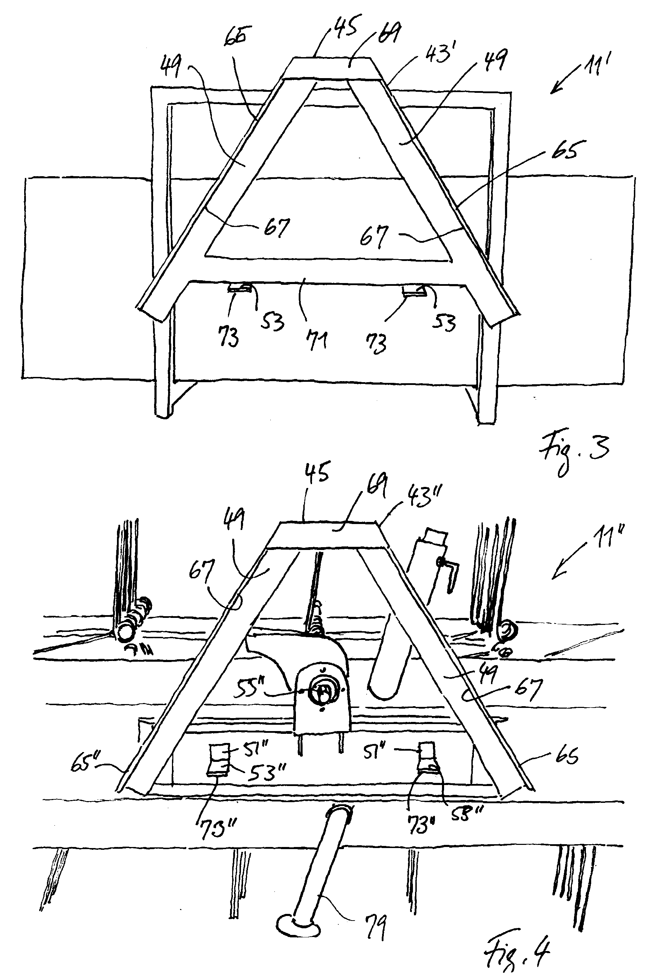

Damit auch grössere Momente übertragen werden können, können die Kupplungsköpfe33*,55*, wie in Figur 2 gezeigt, konisch ausgeformt sein. Der Konus oder Kegelstumpf kann wie abgebildet eine geradlinige Falllinie aufweisen, oder diese kann eine Kreisbogenlinie beschreiben, weiche vorteilhaft etwa den Radius der Schwenkbewegung aufweist. Dabei werden vorteilhaft die Zähne 63 am männlichen Kopf 55* von der Spitze nach Aussen und Hinten breiter, so dass die Zahnlücken am selben Kopf parallele Wandungen haben. Die Zähne am weiblichen Kopf 33* weisen entsprechend parallele Zähne und nach Aussen sich verbreiterende Zahnlücken auf. Dadurch lassen sich diese Kupplungsköpfe 33*,55* auch dann ineinander schieben, wenn die Zähne dabei aneinander vorbeigleiten müssen.

Alternativ kann der Zapfkopf 33 auch translatorisch verschiebbar sein und erst nach oder mit dem Verbinden der beiden Kupplungsteile 23,43 über die Antriebswelle geschoben werden. Dazu ist der verschieblich gelagerte Kopf (33) vorteilhaft mit den Verriegelungsmitteln 41,51 gekoppelt, so dass bei angehobener oder zurückgezogener Klinke 41 oder Falle der Verriegelungsmittel 41,51 der Kupplungskopf 33 von der Stossfläche weg zurückverschoben ist, bei verriegelter Position der Verriegelungsmittel 41,51 jedoch vorgeschoben und daher mit der Antriebswelle 55 gekuppelt ist.

Figur 3 zeigt das Kupplungsteil 43' an einem Gerät ohne Antriebswelle. Das Kupplungsteil 43' ist an einem Grundgerüst des Geräts 11' befestigt und hat eine Struktur, welche an ein grosses A erinnert. Die beiden Schenkel 65 sind aus zwei nach oben zusammenlaufenden Winkelprofilen gebildet, deren Innenseiten die Stossfläche 49 und die nach unten gerichteten Flanken 67 bilden. An der Spitze 45 des A sind die beiden Winkelprofile mit einem horitzontalen Endstück 69 verbunden. Dieses ist ein nach unten offenes U-Profil oder ein Winkelprofil, dessen Winkel oben auf der vom Gerät abgewandten Seite angeordnet ist. Diese Profil bildet auf seiner Innenseite die Anschlagfläche 47 (Fig. 1) und ist oben geschlossen. Der Querstrich des A ist durch ein Flacheisen 71 gebildet. An diesem sind zwei leicht nach unten weisende Sicherungsplättchen 73 befestigt, deren Oberseite 53 bei eingekuppeltem traktorseitigem Kupplungsteil 23 dieses daran hindern, nach unten aus dem geräteseitigen Kupplungsteil 43 auszufahren. Die Klinken 41 am traktorseitigen Kupplungsteil rasten beim Zusammenführen der Kupplungsteile hinter dem Flacheisen 71 ein und verriegeln diese dadurch gegeneinander.

Alternativ dazu können die Klinken oder können verriegelnde Fallen auch seitlich aus dem traktorseitigen Kupplungsteil 23 durch die Flanken 75 (siehe Fig. 5) hindurch reichen und in die Flanken 67 einklinken.

Figur 4 zeigt ein geräteseitiges Kupplungsteil 43'' an einem Bandheuer 11'' mit Antriebswelle 55''. Dieses ist genau gleich aufgebaut wie das Kupplungsteil 43'. Da am Bandheuer 11'' bereits eine Querstrebe 71'' vorlag, sind lediglich die beiden Schenkel 65 bildenden Winkelprofile mit dem Endstück 69 am Bandheuer angeschweisst. Die Sicherungsplättchen 73'' sind als zwei getrennte Teile, jeweils zusammen mit einem Rückhalt 51' für die Klinke 41 (Fig. 1 und 5) zusammen, am Bandheuer 11'' angeordnet.

Da das Endstück 69 nicht in einen Spitz zuläuft, sondern eine gewisse horizontale Ausdehnung aufweist, kann das Gerät auch dann problemlos angekuppelt werden, wenn diese gegenüber dem Traktor zur Seite hin geneigt steht. Das obere Ende 35 des traktorseitigen Kupplungsteils 23, welches ebenfalls diese Breite aufweist, greift nämlich hinter den traktorseitigen Schenkel des das Endstück 69 bildenden Profils und hebt das Gerät zuerst auf der Seite an, auf der es tiefer liegt. Dadurch richtet sich das Gerät nach der Stellung des Traktors, so dass die beiden Schenkel 65 über die Schenkel 77 (Figur 5) es traktorseitigen Kupplungsteils 23 verschwenken können. Beim Verschwenken kuppelt die Welle 55'' automatisch ein.

Der Bandheuer 11'' kann auch gegen den Traktor hin geneigt abgestellt werden. Dadurch muss das Bein 79 beim Gerät Abstellen oder Ankuppeln nicht verstellt werden.

Figur 5 zeigt das traktorseitige Kupplungsteil 23 in einer Frontalansicht. Der Zweiachstraktor 13 mit niedrigem Schwerpunkt ist für geneigte Lagen geeignet. An seiner Frontseite ist der Geräteträger 19 schwenkbeweglich befestigt. Es gibt auch Geräteträger, welche eine Parallelverschiebung mittels eines Hebelparallelogramms ausführen. Auch solche sind für erfindungsgemässes Ankuppeln verwendbar.

Das traktorseitige Kupplungsteil 23 ist A-förmig. Zwei nach oben zusammenlaufende Schenkel 77 aus Vierkantprofilen sind durch ein horizontales Endstück 78 am oberen Ende 35 verbunden. Im unteren Bereich ist zwischen den Schenkeln 77 eine Verbindungsstange 81 angeordnet. An den Schenkeln 77 und der Verbindungsstange 81 ist eine Halterung 82 für den Kopf 33 der Zapfwelle 31 (Fig. 1) befestigt. Auf der Hinterseite der Verbindungsstange 81 sind die Klinken 41 gemeinsam angelenkt. Die Klinken 41 sind mit einem Hebel 83 betätigbar. Eine Feder 85 drückt die Klinken 41 in eine Einraststellung.

Zum Abkuppeln wird das traktorseitige Kupplungsteil 23 gesenkt und der Hebel 83 über die Leine 87 betätigt. In der Folge rasten die Klinken 41 aus den geräteseitigen Verrigelungsmitteln 51 aus. Die Kupplungsteile 23,43 verschwenken unten auseinander und das traktorseitige Kupplungsteil 23 kann nach unten aus dem Entstück 69 ausgefahren werden. Dazu braucht der Maschinenführer weder vom Fahrzeug zu steigen noch eine Hilfe zu beanspruchen.

## Patentansprüche

1. Verfahren zum Ankuppeln eines Geräts (11,11',11'') an einen Traktor (13), bei welchem ein am Traktor (13) angeordnetes Kupplungsteil (23) von unten in ein Kupplungsteil (43) am Gerät (11,11',11'') eingefahren wird, so dass bei einem Anheben des traktorseitigen Kupplungsteils (23) das Gerät (11,11',11'') mit angehoben wird und in angehobenem Zustand mit dem geräteseitigen Kupplungsteil (43) am traktorseitigen Kupplungsteil (23) hängt, und in Richtung parallel und quer zur Fahrtrichtung des Traktors (13) stabil mit diesem verbunden ist, dadurch gekennzeichnet, dass die Kupplungsteile (23,43) in einem Winkel zueinander zusammengeführt werden, lediglich im oberen Bereich ineinander eingehängt werden und anschliessend, z.B. durch Anheben des traktorseitigen Kupplungsteils (23), im unteren Bereich gegeneinander geführt werden.

2. Verfahren nach Anspruch 1, dadurch gekennzeichnet, dass die Kupplungsteile (23,43) während oder nach dem Zusammenführen im unteren Bereich in diesem unteren Bereich miteinander verriegelt werden.

3. Verfahren nach Anspruch 1 oder 2, dadurch gekennzeichnet, dass beim im unteren Bereich Zusammenführen der Kupplungsteile (23,43) die Zapfwelle (31) des Traktors (13) an die Antriebswelle (55) des Geräts (11,11'') angeschlossen wird.

4. Kupplung zum Kuppeln eines Geräts (11,11',11'') an einen Traktor (13), mit einem traktorseitigen Kupplungsteil (23) und einem geräteseitigen Kupplungsteil (43), wobei das traktorseitige Kupplungsteil (23) in funktionsfähiger Stellung zwei nach oben gerichtete und nach oben hin zusammenlaufende Flanken (75), und das geräteseitige Kupplungsteil (43) zwei nach unten gerichtete, nach oben hin zusammenlaufende Flanken (67) aufweist, welche Flanken (67,75) in angekuppeltem Zustand zusammenwirken, mit zwei gegeneinander gerichteten Stossflächen (39,49) an den beiden Kupplungsteilen (23,43), welche etwa vertikal zu einer Achse Traktor (13)/Gerät (11,11',11'') liegen, mit einer zur Traktorseite hin gerichteten, festen Anschlagfläche (37) am traktorseitigen Kupplungsteil (23), welches in angekuppeltem Zustand mit einer zur Geräteseite hin gerichteten, festen Anschlagfläche (47) am geräteseitigen Kupplungsteil (43) zusammenwirkt, so dass das traktorseitige Kupplungsteil (23) zum Ankuppeln von unten unter die Flanken (67) und zwischen die Stossfläche (49) und die Anschlagfläche (47) des geräteseitigen Kupplungsteil (43) geführt werden muss, dadurch gekennzeichnet, dass die Anschlagfläche (47) am geräteseitigen Kupplungsteil (43) lediglich im oberen Bereich ausgebildet ist, so dass die in diesem oberen Bereich zusammengefügten Kupplungsteile (23,43) um ein Schwenkzentrum gegeneinander verschwenkbar sind, und im unteren Bereich Mittel (41,51,71,51'') zur lösbaren Verriegelung der beiden Kupplungsteile (23,43) aneinander vorgesehen sind, um wenigstens eine Verschwenkung der auch unten zusammengefügten Kupplungsteile (23,43) zu verhindern oder freizugeben.

5. Kupplung nach Anspruch 4, dadurch gekennzeichnet, dass am traktorseitigen Kupplungsteil (23) eine mit einem Motor oder Getriebe verbundene Zapfwelle (31) mit Abstand zum Schwenkzentrum so angeordnet ist, dass sie in gekuppeltem Zustand axial mit einer allfälligen Antriebswelle (55) am Gerät (11,11'') ausgerichtet ist.

6. Kupplung nach Anspruch 4 oder 5, dadurch gekennzeichnet, dass am geräteseitigen Kupplungsteil (43) eine nach oben gerichtete Sicherungsfläche (53) und am traktorseitigen Kupplungsteil (23) eine nach unten gerichtete Sicherungsfläche (54) angeordnet ist, welche bei zusammengefügten und insbesondere bei verriegelten Kupplungsteilen (23,43) aneinander anliegend zusammenwirken.

7. Kupplung nach einem der Ansprüche 4 bis 6, dadurch gekennzeichnet, dass der Abstand zwischen den Anschlagflächen (37,47) und den Stossflächen (39,49) der beiden Kupplungsteile einander entsprechen, dass das traktorseitige Kupplungsteil (23) im oberen Bereich schmaler ist als der Abstand zwischen Anschlagfläche (47) und Stossfläche (49) des geräteseitigen Kupplungsteils (43), so dass die Kupplungsteile (23,43) gegeneinander verschwenkbar sind.

8. Kupplung nach einem der Ansprüche 5 bis 7, dadurch gekennzeichnet, dass die Zapfwelle (31) und die Antriebswelle (55) je mit einem Kupplungskopf (33,33*,55'',55*) ausgerüstet sind, welche sich auf einer Kreisbogenlinie zusammenführen lassen, insbesondere, dass der Kupplungskopf (33*,55*) eine kegelförmige oder kegelstumpfförmige Grundform aufweist.

9. Kupplung nach einem der Ansprüche 5 bis 7, dadurch gekennzeichnet, dass die Zapfwelle (31) und die Antriebswelle (55) je mit einem Kupplungskopf (33,55'') ausgerüstet sind, und dass der traktorseitige Kupplungskopf (33) mit dem Kopf (55'') an der Antriebswelle (55) des Geräts (11,11'') geradlinig zusammenführbar sind, und dass der traktorseitige Kupplungskopf (33) translatorisch verschiebbar gelagert ist.
